(19) Europäisches Patentamt
European Patent Office
Office européen des brevets

(11) **EP 3 825 791 A1**

(12) **EUROPÄISCHE PATENTANMELDUNG**

(43) Veröffentlichungstag:
26.05.2021 Patentblatt 2021/21

(51) Int Cl.:
***G05B 17/02*** *(2006.01)*

(21) Anmeldenummer: **19211169.8**

(22) Anmeldetag: **25.11.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder: **Siemens Aktiengesellschaft
80333 München (DE)**

(72) Erfinder:
• **Bhowmick, Mayuri
95445 Bayreuth (DE)**
• **Labisch, Daniel
76149 Karlsruhe (DE)**
• **Pfeiffer, Bernd-Markus
91080 Uttenreuth (DE)**

(54) **VERFAHREN ZUM BESTIMMEN EINES STATIONÄREN MODELLS EINES TECHNISCHEN SYSTEMS**

(57)    Die Erfindung beschreibt ein Verfahren zum computergestützten Bestimmen eines stationären Modells eines technischen Systems. Das erfindungsgemäße Verfahren umfasst den Schritt des Einlesens eines zeitlichen Verlaufs eines Prozesssignals (PS), insbesondere eines automatisierten Produktionsprozesses, das eine Vielzahl an zeitlich aufeinanderfolgenden diskreten Messdaten umfasst. Ferner ist der Schritt des Bestimmens eines Instationaritätsmaßes ($\mu$) aus dem Prozesssignal (PS) für einen jeweiligen Abtastwert (AW) umfasst, wobei jeder Abtastwert (AW) aus einem oder mehreren Messdaten erzeugt ist. Schließlich wird ein stationäres Modell des technischen Systems mit einem Modellierungsverfahren bestimmt, das für jeden Abtastwert (AW) ein Gewicht berücksichtigen kann, wobei ein das Gewicht repräsentierender Gewichtsfaktor ($w(\mu)$) eines jeden Abtastwerts (AW) aus dem zugeordneten Instationaritätsmaß ($\mu$) abgeleitet ist.

FIG 1

EP 3 825 791 A1

**Beschreibung**

Die Erfindung betrifft ein Verfahren zum computergestützten Bestimmen eines stationären Modells eines technischen Systems.

Stationäre Modelle werden beispielsweise für Automatisierungsfunktionen benötigt, welche zur Überwachung mechanischer Komponenten mit stationären Kennfeldern, wie z.B. Pumpen, Ventile, Wärmetauscher und dergleichen, dienen. Stationäre Modelle werden ebenso zur Überwachung und/oder Optimierung stationärer Arbeitspunkte sog. Konti-Anlagen in der Verfahrenstechnik, d.h. Anlagen mit kontinuierlichem Betrieb, genutzt. Stationäre Modelle beschreiben das Verhalten des technischen Systems in stationären Zuständen. Diese lassen sich sehr leicht aus Messdaten identifizieren, die gezielt für diesen Zweck erzeugt wurden. Dazu können beispielsweise relevante Eingangsgrößen Treppenstufen-förmig verändert werden, wobei die Zeitdauer jeder einzelnen Treppenstufe solange gewählt wird, dass der betrachtete Prozess in jeder Stufe auf den neuen stationären Zustand einschwingen kann. Die stationären Endwerte jeder einzelnen Treppenstufe müssen dann manuell aus den Messdaten extrahiert werden, wobei nur stationäre Werte zur Identifikation eines stationären Modells verwendet werden. Dieses Verfahren ist erkennbar aufwändig und erfordert insbesondere bei bestehenden technischen Systemen, einen Eingriff in den laufenden Betrieb, was unerwünscht ist.

Aus der WO 2008/145154 A1 ist ein Verfahren zur Überwachung eines automatisierten Produktionsprozesses bekannt, welches ein Prozesssignal automatisiert im Hinblick auf das Erkennen einer Stationarität oder Instationarität verarbeitet und im Falle einer erkannten Stationarität oder Instationarität ein diesbezügliches Signal generiert. Dieses Verfahren ermöglicht es, ein Produktionssystem zu überwachen und ein Signal zu generieren, wenn ein stationärer Zustand verlassen wird. Dies kann zur Überwachung, z.B. eines Anfahrvorganges des Produktionsprozesses, von Störungen oder von Batch-Phasen, genutzt werden.

Die Identifikation stationärer Modelle aus stationären Daten kann mit Hilfe unterschiedlicher bekannter Verfahren, wie z.B. linearer oder nichtlinearer Regression, künstlicher neuronaler Netze oder Support Vector Machines, erfolgen. Die Verwendung derartiger Verfahren setzt jedoch voraus, dass alle Einflussgrößen, die neben den willentlich verstellbaren Eingangsgrößen auf einen betrachteten Prozess wirken, während der Datenaufzeichnung weitgehend konstant sind. Diese als Störgrößen bezeichneten Größen sind jedoch im Allgemeinen zumindest nicht vollständig mit messtechnischen Mitteln erfassbar. Viele reale technische Prozesse werden im Betrieb eines technischen Systems permanent von externen Störgrößen beeinflusst, so dass sich in regulären Messdaten aus dem Betrieb des technischen Systems kaum eindeutige stationäre Zustände finden. Die bekannte Vorgehensweise, stationäre Zustände in Messdaten aus dem regulären Betrieb des technischen Systems zu suchen und nur diese zur Modellierung eines stationären Modells zu verwenden, ist daher nicht praktikabel.

Es ist Aufgabe der Erfindung, ein Verfahren anzugeben, welches die computergestützte Bestimmung eines stationären Modells eines technischen Systems auf andere Weise zuverlässig ermöglicht.

Diese Aufgabe wird mit den Merkmalen der unabhängigen Ansprüche gelöst. Vorteilhafte Ausgestaltungen ergeben sich aus den abhängigen Ansprüchen.

Es wird ein Verfahren zum computergestützten Bestimmen eines stationären Modells eines technischen Systems vorgeschlagen. Das technische System kann beispielsweise eine automatisierte Produktionsanlage zur kontinuierlichen Herstellung eines Produkts mit Hilfe einer Vielzahl an zu überwachenden mechanischen Komponenten mit jeweiligen stationären Kennfeldern, sein.

Das Verfahren umfasst das Einlesen eines zeitlichen Verlaufs eines Prozesssignals, insbesondere eines automatisierten Produktionsprozesses, das eine Vielzahl an zeitlich aufeinanderfolgenden diskreten Messdaten umfasst. Das Prozesssignal kann Messdaten aus dem Produktionsbetrieb des technischen Systems umfassen.

In einem weiteren Schritt erfolgt das Bestimmen eines Instationaritätsmaßes aus dem Prozesssignal für einen jeweiligen Abtastwert, wobei jeder Abtastwert aus einem oder mehreren Messdaten erzeugt ist. Ist der Abtastwert aus einem einzigen Messdatum erzeugt, so entsprechen jeweilige Abtastwerte den zeitlich aufeinanderfolgenden diskreten Messdaten. Ist ein jeweiliger Abtastwert aus mehreren Messdaten erzeugt, so liegt das Prozesssignal in bereits gefilterter Form vor. Die Anzahl der für einen Abtastwert verwendeten Messdaten kann dabei grundsätzlich beliebig gewählt werden. Auf welche Weise die Messdaten zu einem Abtastwert verarbeitet werden, z.B. Mittelung oder ähnliches, ist grundsätzlich beliebig.

Ferner erfolgt das Bestimmen eines stationären Modells des technischen Systems mit einem Modellierungsverfahren, das für jeden Abtastwert ein Gewicht berücksichtigen kann, wobei ein das Gewicht repräsentierender Gewichtsfaktor eines jeden Abtastwerts aus dem zugeordneten Instationaritätsmaß abgeleitet ist.

Die aus dem Prozesssignal abgeleiteten Abtastwerte werden nicht, wie dies beim eingangs genannten Stand der Technik der Fall ist, in "stationärer Zustand" oder "nichtstationärer Zustand" eingeteilt, sondern stattdessen wird jeder Abtastwert mit einer Gewichtung für die Modellbildung versehen. Da der das Gewicht repräsentierende Gewichtsfaktor eines jeden Abtastwerts aus dem zugeordneten Instationaritätsmaß abgeleitet ist, kann der Grad der Instationarität jedes Abtastwerts berücksichtigt werden. Dadurch wird es möglich, stationäre Modelle aus dem zeitlichen Verlauf eines durch Messung erzeugten Prozesssignals zu ermitteln, die keine dedizierten stationären Zustände aufweisen. Insbesondere lassen sich dadurch vorhandene Betriebsdaten von kontinuierlich arbeitenden Produktionsanlagen auf diese Weise auswerten, auch wenn aufgrund von permanenten Störeinwirkungen keine vollständig stationären oder nur sehr wenige stationäre Zustände erkennbar sind.

Die Verwendung eines Gewichtsfaktors, dessen Höhe abhängig von einem Instationaritätsmaß ist, wird in einem Modellierungsverfahren verwendet, das die Gewichtung von Messdaten berücksichtigen kann. Hierdurch wird erreicht, dass Abtastwerte eines Zeitpunktes umso weniger in die Modellierung eingehen, umso geringer der Gewichtungsfaktor für diesen Abtastwert ist.

Das Verfahren kann insbesondere zur Überwachung mechanischer Komponenten mit stationären Kennfeldern, wie z.B. Pumpen, Ventile, Wärmetauscher, usw., verwendet werden. Ebenso ist jedoch eine Nutzung im Rahmen betriebswirtschaftlicher Optimierung von stationären Arbeitspunkten von kontinuierlich arbeitenden Produktionsanlagen, insbesondere in der Verfahrenstechnik, möglich.

Von besonderem Vorteil ist, dass die Modellbildung auf der Basis von während des Betriebs erzeugten Prozessdaten erfolgen kann, so dass keine Experimente im laufenden Betrieb des technischen Systems erforderlich sind.

Als das Prozesssignal können historische Messdaten eingelesen werden. Diese können beispielsweise fortlaufend während des Betriebs des technischen Systems in einem Speicher hinterlegt werden und zu einem beliebigen Zeitpunkt für das vorliegende Verfahren genutzt werden. Alternativ oder zusätzlich können als das Prozesssignal auch zur Laufzeit des technischen Systems gewonnene Messdaten eingelesen werden.

Es ist zweckmäßig, wenn das Instationaritätsmaß nach der Filterung des Prozesssignals für jeden Abtastwert bestimmt wird. Beispielsweise können durch die Filterung des Prozesssignals Messdaten vor der Modellierung geglättet werden. Insbesondere kann dadurch Rauschen in dem Prozesssignal eliminiert werden, was die Beurteilung der Stationarität erleichtert.

Es ist weiterhin zweckmäßig, wenn das aus dem Prozesssignal für einen jeweiligen Abtastwert ermittelte Instationaritätsmaß normiert wird. Beispielsweise kann das Instationaritätsmaß zwischen 0 und 1 normiert werden. Es ist jedoch auch möglich, einen anderen geeigneten Normierungsraum zu verwenden. Die Normierung des Instationaritätsmaßes erleichtert die Entscheidung, wann ein stationärer und wann ein instationärer Betrieb in dem Prozesssignal vorliegt. Darüber hinaus ermöglicht es die Normierung auch, unterschiedliche Prozesssignale in Relation zueinander zu setzen.

Eine weitere Ausgestaltung sieht vor, dass der Gewichtsfaktor eines jedem Abtastwert zugeordneten Instationaritätsmaßes abschnittsweise unterschiedlich definiert wird. Insbesondere ist ein erster Abschnitt vorgesehen, in dem das Instationaritätsmaß durch Unterschreiten eines ersten Grenzwerts einen stationären Zustand des technischen Systems repräsentiert, wobei diesem ein erster Gewichtswert zugewiesen wird. Ferner ist ein zweiter Abschnitt vorgesehen, in dem das Instationaritätsmaß durch Überschreiten eines zweiten Grenzwerts einen instationären Zustand des technischen Systems repräsentiert, wobei diesem ein zweiter Gewichtswert zugewiesen wird. Zweckmäßigerweise sind der erste und/oder der zweite Gewichtswert konstante Werte. Dadurch wird erreicht, dass völlig stationären Zuständen ein erster Gewichtswert, z.B. 1, und vollständig instationären Zuständen ein zweiter Gewichtswert, z.B. 0, zugwiesen wird. Letztere werden dann für die Modellierung gar nicht mehr betrachtet. In einem dritten Abschnitt, in dem das Instationaritätsmaß zwischen dem ersten und dem zweiten Grenzwert liegt, wird dem Instationaritätsmaß ein zwischen dem ersten und dem zweiten Gewichtswert liegender dritter Gewichtswert zugewiesen. Der dritte Gewichtswert kann zwischen dem ersten und dem zweiten Gewichtswert linear oder nichtlinear verlaufen.

Insbesondere wird der erste Grenzwert zu $10^{-s}$ gewählt, wobei der Parameter s einen Sensitivitätswert darstellt. Insbesondere wird der Parameter s in einem Bereich zwischen $0,5 \leq s \leq 1,5$ gewählt. Der zweite Grenzwert wird um einen Faktor n größer als der erste Grenzwert gewählt. Insbesondere liegt der Faktor n in einem Bereich $2 \leq n \leq 5$. Dabei ist es zweckmäßig, wenn der als Tuning-Parameter bezeichnete Faktor n die Bedingung $n \leq 10^s$ einhält.

Der dritte Gewichtswert ist insbesondere ein von dem Instationaritätsmaß, dem Faktor n und dem ersten Grenzwert abhängiger Wert. Der dritte Gewichtswert in dem dritten Abschnitt kann hierbei durch eine Formel ausgedrückt werden, welche abhängig davon, ob ein linearer oder nichtlinearer Zusammenhang in den Intervallgrenzen zwischen dem ersten und dem zweiten Gewichtswert gewünscht ist, entsprechend formuliert ist.

Als Modellierungsverfahren kann eine gewichtete nichtlineare Regression verwendet werden. Alternativ können auch andere Modellierungsverfahren genutzt werden. Die Verwendung einer nichtlinearen Regression bringt den Vorteil mit sich, dass Abtastwerte umso weniger in die Fehlerquadratsumme und damit in die Modellbildung eingehen, umso geringer der Gewichtungsfaktor für diesen Abtastwert ist.

Es ist weiterhin zweckmäßig, wenn ein stationäres Modell, das mehrere Ausgangsgrößen umfasst, in mehrere Teilmodelle zerlegt wird. Dabei umfasst jedes Teilmodell eine Ausgangsgröße und zumindest eine Eingangsgröße, wobei für jede Ausgangsgröße jedes Teilmodells Gewichtungsfaktoren getrennt bestimmt werden. Mit anderen Worten werden Mehrgrößenmodelle für die Modellierung in mehrere sog. MISO (Multi-Input Single-Output)-Teilmodelle zerlegt. Die Gewichtungsfaktoren können für jede Modell-Ausgangsvariable für jedes Teilmodell separat bestimmt werden, sofern verschiedene Ausgangsvariablen deutlich unterschiedliches Einschwingverhalten zeigen.

Eine weitere Ausgestaltung sieht vor, dass mehrere Prozesssignale eingelesen werden, wobei jedes Prozesssignal eine Vielzahl an zeitlich aufeinanderfolgenden diskreten Messdaten umfasst und wobei das Bestimmen des Gewichtungsfaktors aus den mehreren Prozesssignalen folgende Schritte umfasst: Es erfolgt ein separates Bestimmen eines jeweiligen Instationaritätsmaßes für jedes Prozesssignal aus Ausgangsgröße und das Prozesssignal beeinflussende Eingangsgrößen. Es erfolgt die Bestimmung eines maximalen Instationaritätsmaßes für jeden Abtastwert der Ausgangs- und Eingangsgrößen. Schließlich erfolgt die Ermittlung des Gewichtsfaktors für das ermittelte maximale Instationaritätsmaß. Diesem Vorgehen liegt zugrunde, dass ein Prozess als in einem stationären Zustand befindlich betrachtet wird, wenn seine Ausgangsgröße und alle seine Eingangsgrößen in einem stationären Zustand sind. Der Grad der Instationarität wird dann für jedes Ein- und Ausgangssignal separat berechnet. Anschließend wird für jeden Zeitpunkt der maximale Instationaritätsmaß aller Signale bestimmt. Dieses Maximum wird dann zur Ermittlung des Gewichtungsfaktors für diesen Zeitpunkt (Abtastwert) herangezogen.

Neben der Bestimmung des maximalen Instationaritätsmaßes kann selbstverständlich auch jede andere algebraische Relation zwischen den einzelnen Instationaritätsmaßen verwendet werden, wie beispielsweise ein Mittelwert.

Die Überprüfung der Modellgüte kann mittels einer Simulation des ermittelten stationären Modells mit den Eingangssignalen aus den Prozessdaten erfolgen. Simulierte Ausgangssignale werden parallel zu den Original-Prozessdaten als Trendkurve angezeigt. Dadurch, dass das bestimmte stationäre Modell die Prozessdaten eines dynamischen Prozesses in nicht-stationären Zuständen nicht genau wiedergeben kann, ist es zweckmäßig, die Gewichtungsfaktoren für jeden Abtastwert ebenfalls zu visualisieren. Im Idealfall kann die Darstellung der Gewichtungsfaktoren z.B. durch eine graduelle Einfärbung des Prozessdatenverlaufs erfolgen. Die Beurteilung der Güte des ermittelten technischen Modells kann dann durch einen Operator des technischen Systems erfolgen. Zur Validierung kann auch ein zweiter Datensatz des Prozesssignals verwendet werden, der nicht für die Ermittlung des stationären Modells benutzt worden ist. Im Gegensatz zu den für die Bestimmung des stationären Modells genutzten Daten des Prozesssignals braucht der zur Validierung genutzte Datensatz nicht den gesamten Arbeitsbereich des Prozesses abdecken.

Das oben beschriebene und nachfolgend weiter erläuterte Verfahren wird bevorzugt in Software implementiert, so dass die Erfindung ein Computerprogramm mit durch einen Computer ausführbaren Programmcodeanweisungen zur Implementierung des hierin beschriebenen Verfahrens umfasst.

Des Weiteren bezieht sich die Erfindung auch auf ein Computerprogrammprodukt, insbesondere ein Speichermedium, mit einem durch einen Computer ausführbaren derartigen Computerprogramm.

Schließlich bezieht sich die Erfindung auch auf ein System mit zumindest einer Recheneinheit und einem in diesem zugeordneten Speicher implementierten Computerprogramm.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Es zeigen:

Fig. 1    den zeitlichen Verlauf eines Prozesssignals bei unterschiedlich starker Filterung sowie zugehörige Instationaritätsmaße $\mu$ und daraus ermittelte Stationaritätsparameter $\lambda$ für unterschiedliche Sensitivitäten; und

Fig. 2    einen binären Stationaritätsparameter $\lambda$ in Abhängigkeit von einem ermittelten Instationaritätsmaß $\mu$ sowie einen in Abhängigkeit des ermittelten Instationaritätsmaßes ermittelten Gewichtungsfaktor w.

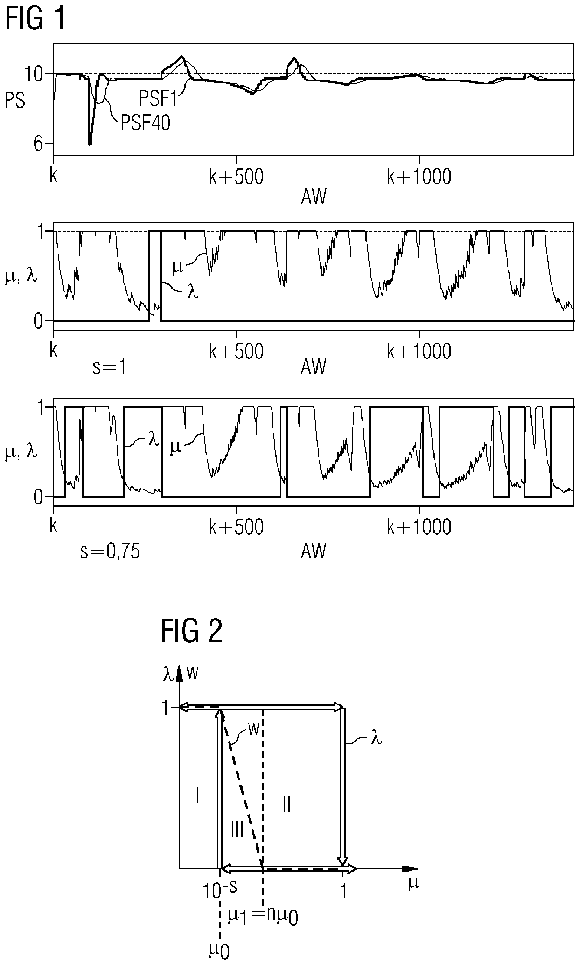

Ausgangspunkt für das Verfahren zum computergestützten Bestimmen eines stationären Modells eines technischen Systems sind historische Messdaten aus dem Betrieb des technischen Systems, z.B. einer Produktionsanlage. Die Messdaten liegen als eine oder mehrere Prozesssignale PS vor, wobei jedes Prozesssignal PS eine Vielzahl an zeitlich aufeinanderfolgenden diskreten Messdaten umfasst. Um ein statistisches Rauschen in den Messdaten zu eliminieren, wird eine Anzahl an zeitlich aufeinanderfolgenden Messdaten zu einem jeweiligen Abtastwert AW, z.B. durch Mittelwertbildung, zusammengefasst. Die oberste Figur in Fig. 1 zeigt das Prozesssignal PS, mit jeweils unterschiedlicher Filterung, PSF1 und PSF40, wobei beim Prozesssignal PS eine Filterung mit der Zeitkonstante n = 1 und beim Prozesssignal PSF40 eine Mittelwertbildung über n = 40 Messwerte erfolgt ist. Dem Fachmann ist klar, dass es ausreichend ist, lediglich ein in einer bestimmten Art und Weise gefiltertes Prozesssignal PSF1 oder PSF40 zu verwenden. In der nachfolgenden Beschreibung wird daher lediglich auf "das Prozesssignal PS" Bezug genommen, obwohl klar ist, dass damit entweder das Prozesssignal PSF1 oder PSF40 weiterverarbeitet wird.

Mittels des aus der WO 2008/145154 A1 bekannten Verfahrens wird das Prozesssignal PS weiterverarbeitet, um eindeutig stationäre Zustände zu ermitteln. Die Stationarität wird durch den Parameter $\lambda$ mit den Zuständen "stationär ja" = 1 oder "stationär nein" bzw. "instationär" = 0 angegeben. Daneben wird ein Analogwert, der als Instationaritätsmaß $\mu$ bezeichnet wird, in normierter Form ermittelt. Das Instationaritätsmaß $\mu$ ist ein Maß für die Instationarität in einem beispielhaft gewählten Intervall von 0 bis 1. Wird im zeitlichen Verlauf der Abtastwerte des Prozesssignals PS für einen Abtastwert ein Instationaritätsmaß von $\mu \geq 1$ erkannt, so verändert das binäre Stationaritätsparameter $\lambda$ seinen Wert auf 0, d.h. ab diesem Zeitpunkt wird das Prozesssignal als instationär markiert. Sobald im Zeitverlauf der Abtastwerte für einen Abtastwert ein Instationaritätsmaß $\mu$ von $\mu \leq 10^{-s}$ erkannt wird, wobei der Parameter s eine sog. Sensitivität darstellt, ändert der Stationaritätsparameter $\lambda$ seinen Wert von 0 auf 1, d.h. ab diesem Zeitpunkt wird das Signal als stationär markiert. Das Instationaritätsmaß zum Erkennen eines stationären Zustands wird typischerweise auf $\mu \leq 0,1$ gewählt.

Mit dieser Vorgehensweise ist es möglich, das Verlassen eines stationären Zustands so schnell wie möglich zu erkennen. Da der Übergang von einem instationärem zu einem stationären Zustand eine gewisse Einschwingzeit erfordert, ist die sichere Erkennung eines stationären Zustands zeitlich nicht unmittelbar festzustellen.

Fig. 1 zeigt den Verlauf des Stationaritätsparameters $\lambda$ und des Instationaritätsmaßes $\mu$ für zwei unterschiedlich gewählte Sensitivitäten s = 1 (mittleres Diagramm) und s = 0,75 (unteres Diagramm. Es ist ohne weiteres erkennbar, dass bei kleiner gewählter Sensitivität (unteres Diagramm) mehr stationäre Zustände erkannt werden.

Das oben beschriebene Verfahren erlaubt es jedoch lediglich, die Abtastwerte binär in stationär oder instationär einzuteilen, was bei realen Messdaten in vielen Fällen nicht sinnvoll ist. Das nachfolgend beschriebene Verfahren sieht daher vor, nicht nur die stationär kategorisierten Abtastwerte für die Bestimmung des stationären Modells zu verwenden, sondern jeden Abtastwert mit einem Gewichtsfaktor $w(\mu)$ für die Modellbildung zu versehen. Der Gewichtsfaktor w stellt damit einen von dem Instationaritätsmaß $\mu$ abhängigen Wert dar.

Je größer das Instationaritätsmaß $\mu$ ist, desto geringer wird das Gewicht w des gerade betrachteten Abtastwerts. Wenn das Instationaritätsmaß $\mu$ oberhalb eines vorab festgelegten Grenzwerts (zweiter Grenzwert) liegt, wird der Gewichtsfaktor w zu 0, damit eindeutig instationäre Übergangsvorgänge nicht in die Modellbildung eingehen. Anstatt auf einer kleinen Anzahl von Mittelwerten vollständig stationärer Zustände beruht das vorgeschlagene Verfahren zur Bestimmung des stationären Modells auf einer großen Zahl von gewichteten Abtastwerten. Hieraus ist erkennbar, dass es zweckmäßig ist, nicht mit den ungefilterten Messdaten, sondern mit den zu Abtastwerten gefilterten Messdaten zu arbeiten.

Fig. 2 zeigt in einem Diagramm die bislang bekannte Vorgehensweise zur Ermittlung des binären stationären Stationaritätsparameters $\lambda$ in Abhängigkeit des analogen Instationaritätsmaßes $\mu$ über eine Hysteresefunktion. Der Schaltpunkt für die Umschaltung des Stationaritätsparameters von $\lambda = 0$ nach $\lambda = 1$ erfolgt bei einem ersten Grenzwert $\mu_0 = 10^{-s}$. Standardmäßig wird für die Sensitivität s = 1 verwendet, wobei grundsätzlich Werte im Bereich zwischen $0,5 \leq s \leq 1,5$ üblich sind. Eine Umschaltung des Stationaritätsparameters von $\lambda = 1$ nach $\lambda = 0$ erfolgt bei $\mu \geq 1$. Hierdurch wird das oben beschriebene Verhalten erzielt.

Im gleichen Diagramm wird die Bestimmung des erfindungsgemäß genutzten Gewichtsfaktors w in Abhängigkeit vom analogen Instationaritätsmaß $\mu$ gezeigt. Dabei sind drei Abschnitte I, II und III wie folgt definiert:

$$w(\mu) = \begin{cases} 1 & \forall \quad \mu \leq \mu_0: \text{ Abschnitt I} \\ \frac{-1}{(n-1)\mu_0}(\mu - n\mu_0) & \text{sonst:} \quad \text{Abschnitt III} \\ 0 & \forall \quad \mu \geq n\mu_0: \text{ Abschnitt II} \end{cases} \qquad (1).$$

Der Gewichtsfaktor $w(\mu)$ wird somit in drei Abschnitte unterteilt, wobei der erste Abschnitt I den vollkommen stationären Zustand, der Abschnitt II den vollkommen instationären Zustand und der Abschnitt III einen Zustand repräsentiert, in dem das Maß der Instationarität berücksichtigt wird. In der in Fig. 2 gezeigten Form, die sich aus der Formel (1) ergibt, ergibt sich im Abschnitt III der lineare Verlauf, der jedoch nicht zwingend ist.

Die Ermittlung des Gewichtsfaktors w in Abhängigkeit des Instationaritätsmaßes $\mu$ ermöglicht, dass völlig stationäre Werte (Abschnitt I) mit dem vollen Gewicht w = 1 in die Modellierung eingehen. Werte, deren Instationaritätsmaß $\mu$ größer als ein zweiter Grenzwert $\mu_1 = n\,\mu_0$ ist, werden für die Modellierung gar nicht betrachtet. Der zweite Grenzwert $\mu_1$ ist dabei n-mal so groß wie der erste Grenzwert $\mu_0 = 10^{-s}$ gewählt. In Abschnitt III nimmt der Gewichtsfaktor w mit zunehmender Instationarität, d.h. größer werdenden Instationaritätsmaßen $\mu$, ab. Der Faktor n ist ein Parameter, der üblicherweise Werte zwischen $2 \leq n \leq 5$ annehmen kann, wobei $n \leq 10^s$ ist.

Die Bestimmung des Instationaritätsmaßes $\mu$. kann auch auf andere Weise als der hierin beschriebenen Weise erfolgen.

Jedem der Abtastwerte AW des Prozesssignals PS kann nun ein Gewichtungsfaktor w in Abhängigkeit des ermittelten Instationaritätsmaßes $\mu$ zugeordnet werden, wobei die mit dem Gewichtsfaktor w gewichteten Abtastwerte AW einem Modellierungsverfahren, z.B. einer gewichteten nichtlinearen Regression, übergeben werden. Grundsätzlich kann jedes Modellierungsverfahren, das die Gewichtung von Messdaten berücksichtigen kann, genutzt werden. Bei der Bildung einer Fehlerquadratsumme im Rahmen des Modellierungsverfahrens einer gewichteten nichtlinearen Regression wird dann der Fehler zu jedem Zeitpunkt mit dem Gewichtsfaktor w dieses Abtastwerts multipliziert.

Liegt das technische System als Mehrgrößenmodell vor, d.h. es gibt mehrere Ausgangsgrößen und eine Vielzahl an Eingangsgrößen, wird für die Modellierung das Mehrgrößenmodell in mehrere MISO-Teilmodelle zerlegt. Die Gewichtungsfaktoren können dann für jede Modell-Ausgangsvariable, d.h. für jedes Teilmodell, separat bestimmt werden. Dies erfolgt insbesondere dann, wenn verschiedene Ausgangsvariablen deutlich unterschiedliches Einschwingverhalten zeigen.

Allgemein wird ein Prozess als in seinem stationären Zustand bezeichnet, wenn seine Ausgangsgröße (d.h. das Prozesssignal PS) und alle seine Eingangsgrößen in einem stationären Zustand sind. Der Grad des Instationaritätsmaßes $\mu$ wird dann für jedes Ein- und Ausgangssignal separat berechnet. Für jeden Abtastwert (d.h. einer Anzahl an gewichteten Messdaten) wird der maximale Wert des Instationaritätsmaßes $\mu$ aller Signale bestimmt und dieses Maximum zur Ermittlung des Gewichtungsfaktors für diesen Abtastwert herangezogen.

Die Überprüfung der Modellgüte kann anhand einer Simulation des nunmehr vorliegenden stationären Modells mit den Eingangssignalen aus dem als Messdaten verwendeten Prozesssignal (Lerndaten) erfolgen.

Durch die Gewichtung von Abtastwerten mit einem Instationaritätsmaß ist es möglich, ein stationäres Modell aus (historischen) Messdaten zu ermitteln, die keine eindeutig identifizierbaren stationären Zustände aufweisen. Insbesondere lassen sich aus vorhandenen (historischen) Messdaten eines technischen Systems stationäre Modelle ermitteln, auch wenn aufgrund von permanenten Störeinwirkungen keine oder nur wenige stationäre Zustände erkennbar sind. Das vorbeschriebene Verfahren wurde von den Erfindern durch Tests erfolgreich verifiziert.

Der Gewichtungsfaktor wird aus dem Instationaritätsmaß über eine abschnittsweise definierte Funktion ermittelt, so dass die folgenden Eigenschaften sichergestellt sind: Eindeutig stationäre Zustände bekommen, falls vorhanden, einen maximalen Gewichtswert. Eindeutig instationäre Zustände bekommen einen Gewichtswert von 0 zugewiesen. Dazwischen nimmt der Gewichtsfaktor mit zunehmender Instationarität ab. Durch die Verwendung eines Modellierungsverfahrens, das die Gewichtung von Mess- bzw. Abtastwerten berücksichtigen kann, wird dann erreicht, dass die Abtastwerte eines Zeitpunktes umso weniger in die Fehlerquadratsumme und damit in die Modellbildung eingehen, umso geringer der Gewichtungsfaktor für diesen Zeitpunkt ist.

Durch die Zerlegung von Mehrgrößenmodellen in MISO-Teilmodelle wird erreicht, dass die Gewichtungsfaktoren individuell auf das Einschwingverhalten der jeweils relevanten Prozess-Ausgangsvariablen angepasst werden.

Das vorbeschriebene Vorgehen lässt sich im Umfeld der Automatisierungstechnik nutzen, deren technische Systeme oder technische Anlagen zu bestimmten Zwecken mit stationären Modellen beschrieben werden. Bei der technischen Anlage kann es sich um eine Anlage der Prozessindustrie handeln z.B. in den Branchen der chemischen, pharmazeutischen, petrochemischen oder der Nahrungs- und Genussmittelindustrie. Auch Anlagen der Öl- oder Gasindustrie oder der Energieerzeugung sind umfasst, ebenso wie Anlagen der Fertigungsindustrie. Solche technische Anlagen werden zumeist mittels eines Automatisierungssystems gesteuert und überwacht. Somit lassen sich beispielsweise mechanische Komponenten mit stationären Kennfeldern überwachen. Darüber hinaus ist auch eine betriebswirtschaftliche Optimierung stationärer Arbeitspunkte, insbesondere von kontinuierlich arbeitenden Prozessanlagen möglich.

## Patentansprüche

1.  Verfahren zum computergestützten Bestimmen eines stationären Modells eines technischen Systems, umfassend die Schritte:

    - Einlesen eines zeitlichen Verlaufs eines Prozesssignals (PS), insbesondere eines automatisierten Produktionsprozesses, das eine Vielzahl an zeitlich aufeinanderfolgenden diskreten Messdaten umfasst;
    - Bestimmen eines Instationaritätsmaßes ($\mu$) aus dem Prozesssignal (PS) für einen jeweiligen Abtastwert (AW), wobei jeder Abtastwert (AW) aus einem oder mehreren Messdaten erzeugt ist;
    - Bestimmen eines stationären Modells des technischen Systems mit einem Modellierungsverfahren, das für jeden Abtastwert (AW) ein Gewicht berücksichtigen kann, wobei ein das Gewicht repräsentierender Gewichtsfaktor (w(p)) eines jeden Abtastwerts (AW) aus dem zugeordneten Instationaritätsmaß ($\mu$) abgeleitet ist.

2.  Verfahren nach Anspruch 1, bei dem als das Prozesssignal (PS) historische Messdaten eingelesen werden.

3.  Verfahren nach Anspruch 1 oder 2, bei dem das Instationaritätsmaß ($\mu$) nach der Filterung des Prozesssignals (PS) für jeden Abtastwert (AW) bestimmt wird.

4.  Verfahren nach einem der vorhergehenden Ansprüche, bei dem das aus dem Prozesssignal (PS) für einen jeweiligen Abtastwert (AW) ermittelte Instationaritätsmaß ($\mu$) normiert wird.

5.  Verfahren nach einem der vorhergehenden Ansprüche, bei dem der Gewichtsfaktor (w($\mu$)) eines jedem Abtastwert (AW) zugeordneten Instationaritätsmaßes ($\mu$) abschnittsweise unterschiedlich definiert wird, wobei

    • einem ersten Abschnitt, in dem das Instationaritätsmaß ($\mu$) durch Unterschreiten eines ersten Grenzwerts

($\mu_0$) einen stationären Zustand des technischen Systems repräsentiert, ein erster Gewichtswert ($w_1$) zugewiesen wird,
• einem zweiten Abschnitt, in dem das Instationaritätsmaß ($\mu$) durch Überschreiten eines zweiten Grenzwerts ($n\mu_0$) einen instationären Zustand des technischen Systems repräsentiert, ein zweiter Gewichtswert ($w_2$) zugewiesen wird, und
• einem dritten Abschnitt, in dem das Instationaritätsmaß (p) zwischen dem ersten und dem zweiten Grenzwert (p, $\mu_1$) liegt, ein zwischen dem ersten und dem zweiten Gewichtswert ($w_1$, $w_2$) liegender dritter Gewichtswert ($w_3$) zugewiesen wird.

6. Verfahren nach Anspruch 5, bei dem der erste Grenzwert ($\mu_0$) als $10^{-s}$ gewählt wird, wobei s einen Sensitivitätswert, insbesondere im Bereich $0{,}5 \le s \le 1{,}5$, ist.

7. Verfahren nach Anspruch 5 oder 6, bei dem der zweite Grenzwert ($\mu_1$) um einen Faktor n größer als der erste Grenzwert ($\mu_0$) gewählt wird, wobei der Faktor n insbesondere im Bereich $2 \le n \le 5$ liegt.

8. Verfahren nach Anspruch 7, bei dem der dritte Gewichtswert ($w_3$) ein von dem Instationaritätsmaß ($\mu$), dem Faktor n und dem ersten Grenzwert ($\mu_0$) abhängiger Wert ist.

9. Verfahren nach einem der vorhergehenden Ansprüche, bei dem als Modellierungsverfahren eine gewichtete nichtlineare Regression verwendet wird.

10. Verfahren nach einem der vorhergehenden Ansprüche, bei dem ein stationäres Modell, das mehrere Ausgangsgrößen umfasst, in mehrere Teilmodelle zerlegt wird, wobei jedes Teilmodell eine Ausgangsgröße und zumindest eine Eingangsgröße umfasst, wobei für jede Ausgangsgröße jedes Teilmodells Gewichtungsfaktoren getrennt bestimmt werden.

11. Verfahren nach einem der vorhergehenden Ansprüche, bei dem mehrere Prozesssignale eingelesen werden, wobei jedes Prozesssignal (PS) eine Vielzahl an zeitlich aufeinanderfolgenden diskreten Messdaten umfasst und wobei das Bestimmen des Gewichtungsfaktors (w(p)) aus den mehreren Prozesssignalen folgende Schritte umfasst:

   • separates Bestimmen eines jeweiligen Instationaritätsmaßes ($\mu$) für jedes Prozesssignal (PS) als Ausgangsgröße und das Prozesssignal (PS) beeinflussende Eingangsgrößen;
   • Bestimmung eines maximalen oder mittleren Instationaritätsmaßes ($\mu$) für jeden Abtastwert (AW) der Ausgangs- und Eingangsgrößen;
   • Ermittlung des Gewichtungsfaktors (w($\mu$)) für das maximale oder mittlere Instationaritätsmaß ($\mu$).

12. Computerprogramm mit durch einen Computer ausführbaren Programmcodeanweisungen zur Implementierung des Verfahrens nach einem der Ansprüche 1 bis 11, wenn das Computerprogramm auf einem Computer ausgeführt wird.

13. Computerprogrammprodukt, insbesondere Speichermedium, mit einem durch einen Computer ausführbaren Computerprogramm gemäß Anspruch 12.

14. System mit zumindest einer Recheneinheit und einem in diesem zugeordneten Speicher implementierten Computerprogramm gemäß Anspruch 12 oder einem Computerprogrammprodukt gemäß Anspruch 13.

## FIG 1

## FIG 2

**EP 3 825 791 A1**

<table>
<tr><td colspan="4" style="text-align:center"><strong>EUROPÄISCHER RECHERCHENBERICHT</strong></td><td><strong>Nummer der Anmeldung</strong><br>EP 19 21 1169</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 950 711 B2 (PAVILION TECHNOLOGIES [US]) 27. September 2005 (2005-09-27)<br>* Spalte 1, Zeile 65 - Spalte 2, Zeile 57 *<br>* Spalte 3, Zeile 41 - Zeile 45 *<br>* Spalte 7, Zeile 28 - Zeile 52 *<br>* Spalte 9, Zeile 19 - Spalte 12, Zeile 67 *<br>* Spalte 23, Zeile 59 - Spalte 26, Zeile 25 *<br>* Spalte 31, Zeile 27 - Spalte 34, Zeile 67 *<br>* Spalte 39, Zeile 31 - Spalte 40, Zeile 31 *<br>* Abbildungen 2,6, 7, 29,35 *<br>----- | 1-14 | INV.<br>G05B17/02 |
| A | US 2019/219994 A1 (YAN WEIZHONG [US] ET AL) 18. Juli 2019 (2019-07-18)<br>* Absätze [0003], [0005], [0029] - [0045], [0052] - [0067], [0079]; Abbildung 8 *<br>----- | 1,12-14 | |
| A | US 2017/220711 A1 (YOSHIDA HIROSHI [JP]) 3. August 2017 (2017-08-03)<br>* Absätze [0006], [0012] - [0015], [0048] - [0077], [0100] - [0104]; Abbildungen 1,4 *<br>----- | 1,12-14 | **RECHERCHIERTE SACHGEBIETE (IPC)**<br><br>G05B |

Der vorliegende Recherchenbericht wurde für alle Patentansprüche erstellt

| Recherchenort | Abschlußdatum der Recherche | Prüfer |
|---|---|---|
| München | 5. Mai 2020 | Postemer, Patricia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**

EP 19 21 1169

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2020

| Im Recherchenbericht angeführtes Patentdokument | Datum der Veröffentlichung | Mitglied(er) der Patentfamilie | Datum der Veröffentlichung |
|---|---|---|---|
| US 6950711 B2 | 27-09-2005 | US 6381504 B1<br>US 2003014131 A1<br>US 2003018399 A1 | 30-04-2002<br>16-01-2003<br>23-01-2003 |
| US 2019219994 A1 | 18-07-2019 | KEINE | |
| US 2017220711 A1 | 03-08-2017 | JP 6642431 B2<br>JP WO2016017171 A1<br>US 2017220711 A1<br>WO 2016017171 A1 | 05-02-2020<br>18-05-2017<br>03-08-2017<br>04-02-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008145154 A1